Europäisches Patentamt

European Patent Office

Office européen des brevets

(19)

(11) EP 0 775 718 A2

(12) **EUROPEAN PATENT APPLICATION**

(43) Date of publication:
28.05.1997 Bulletin 1997/22

(51) Int Cl.⁶: **C08J 3/00**, C08J 3/20
// C08L21:00

(21) Application number: 96308441.3

(22) Date of filing: 21.11.1996

(84) Designated Contracting States:
**AT BE DE ES FR GB GR IT NL PT SE**

(30) Priority: **22.11.1995 US 7442**
**07.11.1996 US 745006**

(71) Applicant: **UNION CARBIDE CHEMICALS &**
**PLASTICS TECHNOLOGY CORPORATION**
**Danbury, Connecticut 06817-0001 (US)**

(72) Inventors:
• **Bernier, Robert Joseph Noel**
**Flemington, New Jersey 08822 (US)**
• **Italiaander, Eric Thomas**
**4645 JA Putte (NL)**

• **Paeglis, Arnis Uvi**
**Bridgewater, New Jersey 08807 (US)**
• **Rosenblat, Benjamin Roman**
**Old Bridge, New Jersey 08857 (US)**
• **Scarola, Leonard Sebastian**
**Union, New Jersey 07083 (US)**
• **Sen, Ardhenou**
**Somerset, New Jersey 08873 (US)**

(74) Representative: **Allard, Susan Joyce et al**
**BOULT, WADE & TENNANT**
**27 Furnival Street**
**London EC4A 1PQ (GB)**

(54) **Process for preparing elastomeric compounds from granular elastomers and polymers**

(57)    The present invention provides a continuous process for compounding one or more polymers and finished articles thereof. The process comprises continuously feeding at least one granular elastomer optionally with one or more thermoplastic polymers having average particle sizes of about 5mm or smaller and with optionally one or more additives to a continuous mixer where the components are masticated and melted into a compound and pumping said compound through an orifice or die.

## Description

<u>Field of the Invention</u>

This invention relates to a continuous process for preparing compounds comprising a granular elastomer and optionally other elastomers and thermoplastic polymers. The invention further relates to articles produced from compounds prepared by this process.

<u>Background of the Invention</u>

Elastomers, particularly those in bale form, require a stepwise fabrication process into finished articles. The discontinuity in the process is due to the need to break down the bale or pellets into smaller domains to effect a good interdispersion of the elastomer with various ingredients used in the formulation of the compound. Current incorporation methods of elastomers into fully formulated products typically utilizes batch mixers such as a tangential (Banbury) mixer or intermeshing mixer, with a single or two stage mixing step. In the single stage, all mixing ingredients such as rubber, carbon black, white filers, plasticizers and other solid or liquid additives are added into the mixer, inclusive of curatives on condition that dump temperatures are below 115°C. With the two stage mixing step, in the first stage, various ingredients such as carbon black filler, plasticizers and other solid or liquid additives are added into the mixer to provide homogeneous melt mixing and dispersion of the ingredients. This mixing is accomplished at high stock temperatures of about 140°C to 160°C or higher for compositions including thermoplastic polymers. Then the mixed batch is discharged onto a two-roll mill, or in an extruder, and made into sheets, slabs or pelletized. In the second stage, the compound is fed to a second mixer. For vulcanizable compositions, curatives are added at that stage while maintaining the stock temperature below 115 °C in order to avoid their activation leading to premature crosslinking of the elastomeric composition. Higher processing temperatures are needed for compositions including a thermoplastic polymer or where dynamic vulcanization is desirable. The compound may be discharged into processing equipment to shape the compound into an intermediate form for later use or into the final form of the finished article.

Also, conventional continuous compounding equipment typical of thermoplastic processing known in the art such as twin screw extruders (Werner & Pfleiderer, Berstorff, etc.) and continuous mixers (Farrel, Kobe Steel, Japan Steel, etc.) can sometimes be used instead of batch mixers. However, these devices require the use of continuous feeding of free-flowing ingredients, and the conventional forms of bale rubber are not suitable for this application. Likewise, the use of the conventional continuous mixers and extruders is prohibitive with ground forms of conventional rubbers due to their limited availability in the choices of desired properties and the expense of grinding and keeping the elastomer in a free-flowing state.

All these traditional compounding methods suffer from the complexity of the mixing process and related operations such as handling, mixing, and storing raw materials and semi-finished and intermediate formulated products. These methods are labor and energy intensive and require substantial investments in processing equipment, thereby adding substantial cost to the finished product.

In view of the current state of the art for the fabrication of articles where at least one elastomer is compounded into a final composition, a method which reduces labor and energy costs as compared to conventional methods and applicable to the full range of commercial products is clearly advantageous.

<u>Summary of the Invention</u>

The present invention provides a continuous process for compounding one or more polymers comprising: (i) feeding at least one granular elastomer optionally with one or more thermoplastic polymers and optionally with one or more additives to a continuous mixer; (ii) masticating said granular elastomer with said optional thermoplastic polymers and said optional additives when present in said continuous mixer to form a compound; (iii) pumping said compound through a die downstream to the end of said continuous. mixer

Further, there is provided a process for the continuous compounding of one or more polymers comprising: (i) blending at least one granular elastomer optionally with one or more thermoplastic polymers and optionally with one or more additives when present in a blending vessel to form a mixture; (ii) continuously feeding the mixture with the optional thermoplastic polymers and additives when present to a continuous mixer; (iii) masticating said mixture to form a compound; (iv) pumping said compound through a die downstream to the end of said continuous mixer.

The articles prepared in accordance with the processes using granular, free-flowing polymers and resins produced in a gas phase polymerization have improved and different end use advantages and capabilities.

Brief Description of the Drawing

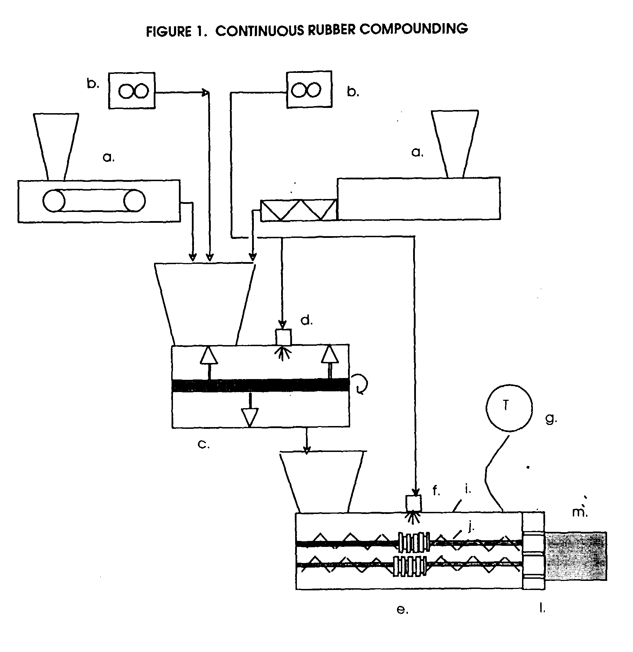

Figure 1 is a schematic of continuous rubber compounding. In the Figure, the components and steps of the invention are shown. The solid ingredients are fed through (a) feeders of gravimetric or volumetric design, liquid ingredients are added with metering pumps (b). The mixture is fed into a preblender which can be a continuous type such as the Littleford® plow style blender (c) or a batch type such as the Henschel® blender in which case an additonal feeder may be used after the Henschel® blender to meter the mixture into a continuous mixer. Oil is sprayed and atomized through nozzle (d). After mixing with a residence time of 1 to 5 minutes, the mixture is fed into a continuous mixer (e). Additional oil is injected such as, for example, at (f) into the continuous mixer as desired. The temperature control means (g) is used, as required, for barrels (i) and rotors (j). The mix is masticated and melt mixed, and volatiles are vented through a vent port (k). Mixed polymer is extruded through a profile die (1) into a shape or pellets. The profile is heated or irradiated via heating means (m) to achieve vulcanization. Alternatively, the cure additives can be injected directly into the continuous mixer (e).

Detailed Description of the Invention

Recent patents such as U.S. Patent Nos. 4,994,534; 5,304,588; 5,317,036; and 5,453,471 teach the production of elastomeric polymers in the gas phase in a fluidized bed reactor. The gas phase polymerizations can be conducted in conventional, condensed including induced condensed mode (U.S. Patent Nos. 4,543,399; 4,588,790; 5,352,749; and 5,462,999), and liquid monomer mode (U.S. Patent No. 5,453,471; PCT 95/09826; and PCT 95/09827) processes. The elastomers produced by these processes are free-flowing and granular with an average particle size of up to about 5 mm, preferably up to about 2 mm or smaller, and most preferably about 1 mm or smaller. Generally, and preferably, these elastomeric polymers are polymerized at or above the sticking or softening temperature of the polymer being produced using one or more inert particulate materials. Inert particulate materials, sometimes referred to as fluidization aids, are disclosed in U.S. Patent No. 4,994,534 and include carbon black, silica, clay, talc, and mixtures thereof. Of these, carbon black, silica, and a mixture thereof are preferred. Carbon black is the most preferred inert particulate material.

Granular, free-flowing polymers produced in the gas phase above the softening temperature of the polymer product in the presence of an inert particulate material are unique and different from powdered, particulate, crumb or pelletized rubbers produced by commercial solution/bulk polymerizations, the gas phase polymer product has a core-shell morphology with the inert particulate material incorporated into the polymer, with a majority of the inert particulate material concentrated in the shell to provide a free-flowing granular form over a wide range of comonomer compositions and molecular weights. In contrast, even if filler were added to the conventional crumb-like materials described above, it only provides physical mixtures and dusting. Also, in distinct contrast to non-gas phase rubbers, as, for example, the use of ground-up tires, the gas phase produced granular rubbers of the present invention (e.g. granular EPDM, EPM, and BR products) are fully capable of being the primary rubber component in typical rubber compounds and are further capable of sulfur or peroxide vulcanization.

Illustrative of the granular, free-flowing elastomers made in a gas phase process which can be processed in accordance with the invention are the following:

IR (polyisoprene)
BR (polybutadiene)
SBR (polymer of butadiene copolymerized with styrene)
Nitrile (polymer of butadiene copolymerized with acrylonitrile)
Butyl (polymer of isobutylene copolymerized with isoprene)
EPM (polymer of ethylene copolymerized with propylene)
EPDM (polymer of ethylene copolymerized with propylene and a diene such as hexadiene, dicyclopentadiene, or ethylidene norbornene)
Copolymers of ethylene and a $C_3$-$C_{12}$ alpha-olefin
Terpolymers of ethylene, an alpha olefin ($C_3$-$C_{12}$), and a diene (preferably non-conjugated)
Neoprene® (polychloroprene)
Silicone (polydimethyl siloxane)
Copolymers of ethylene and vinyltrimethoxy silane
Copolymers of ethylene and one or more of acryonitrile, maleic acid esters, vinyl acetate, acrylic and methacrylic acid esters and the like
Copolymers of butadiene and isoprene
Polystyrene
Terpolymers of styrene, butadiene, and isoprene
Chlorobutyl (chlorinated copolymer of isobutylene and isoprene)

Bromobutyl (brominated copolymer of isobutylene and isoprene)
Brominated copolymer of isobutylene and paramethylstyrene
Chlorinated and chloro-sulfonated polyethylenes

Of these, polyisoprene, polybutadiene, poly(styrene-butadiene) rubber, ethylene-propylene rubbers (EPM), and ethylene-propylenediene rubbers (EPDM) are preferred. Tetrapolymers in accordance with WO 96/11960 and WO 96/12744 can also be continuously compounded in the manner described herein.

A method of practicing the invention comprises continuously feeding to a continuous mixer at least one granular elastomer along with various thermoplastic and additive materials which comprise the formulation of the final composition. The mixer is the processing equipment in which the elastomer and additives are masticated and dispersed to form a compound. Although just about any processing equipment is capable of masticating such a composition, continuous mixers such as Farrel's FCM® and the like, or twin screw compounders or extruders such as Werner and Pfleiderer's ZSK® series and the like, planetary or Berstorff® mixers, or single screw extruders with or without pins in the barrel such as provided by Davis Standard®, or axially reciprocating rotating screws such as the Buss-Condux® type are preferred. The extruders generally, and preferably, have a barrel containing a single rotor, a twin rotor, or a combination of a single and a twin rotor. Typically, the barrel has one or more feed ports and optionally one or more vent ports located along its length. The various elastomers, thermoplastic polymers, and additives can be introduced alone or together through the vent ports. While one or more rotors can be employed, preferably no more than two are used. The masticated compound is then pumped through an orifice or die. Generally, the orifice is a die used to form the compound into an intermediate shape for later use or into the finished article form. Continuous mixers are usually designed to pump the compound directly through the die. Alternatively, it can also be accomplished externally to the continuous mixer by continuously feeding the masticated compound to a single screw extruder, a double or twin screw extruder, or a melt pump. It is understood that the feeding the granular elastomer and optional additives and/or other thermoplastic materials of the composition can be effected simultaneously at more than one location along the mixer, the pumping extruder, and the melt pump by introducing such materials at one or more locations in the mixer or along the extruder via openings, vents, or vent ports.

In another embodiment of the invention, at least one granular elastomer is continuously fed to the mixer with one or more granular thermoplastic polymers and with part or all of the additives of the composition. The particle size of these polymers is about 5 mm or smaller, preferably 2 mm or smaller, and most preferably 1 mm or smaller. Generally, thermoplastic polymers are characterized by their ability to retain useful end use properties without the recourse of crosslinking the molecular network by some external agents such as in the case of most elastomers.

Examples of thermoplastic polymers are polyethylenes and their related copolymers such as butene, propylene, hexene, octene, 4-methyl-1-pentene copolymers; functional grades of polyethylenes such as maleic acid esters, acrylic and metacrylic acid esters, acrylonitrile, vinyl acetate, and derivatives such as chlorinated and sulfonated polyethylenes and copolymers; polypropylenes and their related copolymers; functional grades of polypropylenes such as maleic acid esters, acrylic and metacrylic acid esters; modified grades of polypropylene and copolymers; ionomers; polyvinyl chlorides and their related copolymers, functional and modified grades; polymers of acetal and their related copolymers and modified grades; fluorinated olefin polymers; polyvinylidene fluoride; polyvinyl fluoride; polyamides and their modified grades; polyimides; polyarylates; polycarbonates and their related copolymers and modified grades; polyethers; polyethersulfones; polyarylsulphones; polyketones; polyetherimides; poly(4-methyl-1-pentene); polyphenylenes and modified grades; polysulphones; polyurethanes and their related modified grades; polyesters and their related modified grades; polysterene and their related copolymers and modified grades; polybutylene; polymers of acrylo-nitrile, polyacrylates, mixtures thereof, and the like. Of those, polyethylene and their related copolymers such as butene, propylene, hexene, octene, 4-methyl-1-pentene copolymers, functional grades of polyethylene such as maleic acid esters, acrylic and metacrylic acid esters, acrylonitrile, vinyl acetate, and derivatives such as chlorinated and sulfonated polyethylene and copolymers; polypropylene and their related copolymers, functional grades of polypropylene such as maleic acid esters, acrylic and metacrylic acid esters, modified grades of polypropylene and copolymers; poly(vinyl chloride) and their related copolymers, functional and modified grades; polyamides and their modified grades; polyesters and their related modified grades; polysterene and their related copolymers and modified grades; · polyurethanes and their related modified grades; polyesters and their related modified grades are preferred.

It is further understood that the elastomers that are blended in accordance with the process of this invention do not have to be chemically distinct, provided that they are substantially different in some aspect of molecular structure. For example, they can be the same elastomer in two substantially different molecular weight grades or contain substantially different amounts or ratios of the respective monomers comprising them. The same holds true for the thermoplastic polymers, when employed.

Another embodiment of the invention consists of blending at least one granular elastomer with optionally one or more polymers. Optionally, the mixture contains, in addition to the polymers, any or all of the other compounding ingredients or additives. Any of the conventional methods for physically blending particulate solids, such as, for example, tumbling or stirring, can be used to prepare the mixture. The blending vesseiis operated in batch or continuous mode. The mixture is then continuously fed to the continuous mixer where it is masticated into a compound. It is understood, that the mixture comprises at least two constituents of the composition. The additives and polymers not included in the mixture are continuously fed to the mixer at the same location where the mixture is fed or at other suitable locations via openings or vents along the mixer, the pumping screw, or the melt pump.

The ingredients or additives referred to in the invention are selected optionally from the group consisting of fillers, plasticizers, antioxidants and antiozonants, activators, accelerators, tackifiers, homogenizing agents, peptizers, pigments, flame retardants, processing aids such as sulfur vulcanized vegetable oil (Factice), and fungicides.

Fillers for use in the invention include carbon black; silicates of aluminum, magnesium, calcium, sodium, potassium and mixtures thereof; carbonates of calcium, magnesium and mixtures thereof; oxides of silicon, calcium, zinc, iron, titanium, and aluminum; sulfates of calcium, barium, and lead; alumina trihydrate; magnesium hydroxide; phenol-formaldehyde; polystyrene; and poly(alphamethyl)styrene resins; natural fibers; synthetic fibers; and the like.

Plasticizers for use in the invention include petroleum oils such as ASTM D2226 aromatic, naphthenic and paraffinic oils; polyalkylbenzene oils; organic acid monoesters such as alkyl and alkoxyalkyl oleates and stearates; organic acid diesters such as dialkyl, dialkoxyalkyl, and alkyl aryl phthalates, terephthalates, sebacates, adipates, and glutarates; glycol diesters such as tri-, tetra-, and polyethylene glycol dialkanoates; trialkyl trimellitates; trialkyl, trialkoxyalkyl, alkyl diaryl, and triaryl phosphates; chlorinated paraffin oils; coumarone-indene resins; pine tars; vegetable oils such as castor, tall, rapeseed, and soybean oils and esters and epoxidized derivatives thereof; and the like.

Antioxidants and antiozonants for use in the invention include hindered phenols, bisphenols, and thiobisphenols; substituted hydroquinones; tris(alkylphenyl)phosphites; dialkylthiodipropionates; phenylnaphthylamines; substituted diphenylamines; dialkyl, alkyl aryl, and diaryl substituted p-phenylene diamines; monomeric and polymeric dihydroquinolines; 2-(4-hydroxy-3,5-t-butylaniline)-4,6-bis(octylthio)-1,3,5-triazine, hexahydro-1,3,5-tris-β-(3,5-di-t-butyl-4-hydroxyphenyl)propionyl-s-triazine, 2,4,6-tris(n-1,4-dimethylpentyl-p-phenylenediamino)-1,3,5-triazine, tris-(3,5-di-t-butyl-4-hydroxybenzyl)isocyanurate, nickel dibutyldithiocarbamate, 2-mercaptotolylimidazole and its zinc salt, petroleum waxes, and the like.

Other optional additives for use in the invention include activators (metal oxides such as zinc, calcium, magnesium, cadmium, and lead oxides; fatty acids such as stearic, lauric, oleic, behenic, and palmitic acids and zinc, copper, cadmium, and lead salts thereof; di-, tri-, and polyethylene glycols; and triethanolamine); accelerators (sulfenamides such as benzothiazole sulfenamides, including bis-benzothiazole sulfenamides, and thiocarbamyl sulfenamides, thiazoles, dithiocarbamates, dithiophosphates, thiurams, guanidines, xanthates, thioureas, and mixtures thereof); tackifiers (rosins and rosin acids, hydrocarbon resins, aromatic indene resins, phenolic methylene donor resins, phenolic thermosetting resins, resorcenol-formaldehyde resins, and alkyl phenol formaldehyde resins such as octyl-phenolformaldehyde resin); homogenizing agents, peptizers, pigments, flame retardants, fungicides, functionalized polymers (maleated EPM, EPDM, polyethylene and polypropylene), and the like. The total amount of optional additives can range from about 40 to 800 parts by weight based upon 100 parts of the elastomers in the composition.

Vulcanizing agents for use in the invention include sulfur-containing compounds such as elemental sulfur, 4,4'-dithiodimorpholine, thiuram di- and polysulfides, alkylphenol disulfides, and 2-morpholino- dithiobenzothiazole; peroxides such as di-tertbutyl peroxide, tertbutylcumyl peroxide, dicumyl peroxide, 2,5-dimethyl-2,5-di-(tertbutylperoxy) hexane, di-(tertbutylperoxyisopropyl) benzene, tertbutyl peroxybenzoate and 1,1-di-(tertbutylperoxy)-3,3,5-trimethylcyclohexane; metal oxides such as zinc, magnesium, and lead oxides; dinitroso compounds such as p-quinone dioxime and p,p'-dibenzoylquinonedioxime; and phenol-formaldehyde resins containing hydroxymethyl or halomethyl functional groups. It is understood that mixtures of two or more vulcanizing agents can be employed in the process of the invention. The suitability of any of these vulcanizing agents or mixtures of vulcanizing agents for use in the invention will be largely governed by the choice of elastomers, as is well known to those skilled in the compounding art. For the preferred elastomers of the invention, the sulfur containing compounds and the peroxides are the preferred vulcanizing agents, and the sulfur containing compounds are most preferred. The amount of the vulcanizing agent can range from about 1 to 10 parts by weight based upon 100 parts of the elastomers in the composition.

Vulcanization temperatures and times employed are typical. Temperatures ranging from about 250°F to about 400°F, and times ranging from about 1 minute to about 60 minutes are employed. The final compounded polymer product produced by the process of the invention or at least one of the ingredients (a granular elastomer, a thermoplastic polymer, or an additive) comprising the compounded product are dynamically vulcanized in the continuous mixer.

The invention is particularly useful for the fabrication of vulcanizable EPDM articles such as roofing membranes, seals and weather strips, hoses and tubes, and molded articles. The invention offers great advantages in the preparation of thermoplastic elastomers commonly referred as TPE where the dispersion of the rubber phase in the thermoplastic matrix is critical to the performance of the resulting composition. Examples of TPE are impact modified propylene and copolymers, impact modified polyesters, impact modified polyamides and impact modified polyurethanes. Similarly the invention is applicable to the preparation of dynamically vulcanized thermoplastic elastomers characterized by a vulcanized rubber phase. Examples of dynamically vulcanized thermoplastics, commonly referred as TPV, are mixtures of EPDM and propylene such as Santoprene® , EPDM and polyethylene such as Sarlink®, or any other combination where the dispersed phase is a vulcanizable rubber and the continuous phase is a thermoplastic.

The invention is also useful in the manufacture of tire sidewalls that comprise a blend of EPDM with one or more highly unsaturated elastomers (e.g., BR, SBR, and IR). The advantage of granular blended or preblended elastomers in the process of the invention over conventional baled elastomers is that the granular blended or preblended elastomers enter the energy-intensive mastication process already fairly highly interdispersed. Consequently, considerably less mastication is needed to achieve the high degree of interdispersion desired for optimum performance than if the elastomers entered the mastication process in conventional bale form. Thus, gas phase, free-flowing, granular, blended or preblended elastomers can be mixed to a high degree of elastomer interdispersion in a shorter time and with less polymer degradation than conventional baled elastomers.

Specially formulated elastomeric compounds prepared in accordance with the process of this invention can be extruded through a die to produce articles such as strip stock for the tread, sidewall, and bead filler components of a pneumatic tire, or used to produce sheet stock for the air retention innerliner. Other specially formulated elastomeric compounds prepared in accordance with this invention can be calendered onto textile or steel cord fabric to produce cord-reinforced sheet stock for the carcass and circumferential belt components of the tire.

All patents cited herein are hereby incorporated by reference.

The following examples are given to illustrate the invention and are not intended as limitations thereof. Amounts are in weight percent unless otherwise specified.

## EXAMPLES

### Example 1

This example illustrates processing equipment options suitable to continuously compound an EPDM in a granular form with additives and fillers. The components of the compound formulation shown in Table 1 were introduced in 50 hp Henschel® FM 200 C blender with the exception of the oil. While blending the ingredients, oil was heated up and sprayed into the blender to make a preblend. The resulting preblend was fed continuously to the various compounding equipment described hereafter. Although the preblend was prepared in a bactch mode, further automatization of the feeding process is possible and advantageous as shown schematically in Figure 1, where solid ingredients such as granular elastomers, optionally thermoplastic resins, fillers and additives are continuously fed to a blender C via gravimetric feeders A. Liquid components entering the compound formulation as, in this particular case, oil, are introduced into the blender via pumps B through nozzle D. Optionally a second nozzle F can be used to split feed the liquid components directly to the compounder.

Continuous compounding of the preblend was demonstrated in a single screw extruder, a Werner® and Pfleiderer® twin screw corotating intermeshing extruder and a Pomini® twin screw, non-intermeshing, counter-rotating mixer. The screw design of each machine is provided in Table 2. Among the variables of interest to exemplify the usefulness of the invention were the final stock temperature and the quality of the dispersion. The final temperature of the compound needs to be such as to avoid premature activation of the curatives while dispersion of ingredients is critical for achieving cured physical properties. As indicated in Table 2, the conditions under which the compounding equipment were operated, yielded useful compounds for the manufacturing of finished articles while dispersion was better or equal to that found in similar batch mixed compounds.

TABLE 1

| Compound Formulation | | | |
|---|---|---|---|
| Component | % | Description | Availability |
| EPDM 60 Mooney (ML 1+4 @ 125 C) 33% C3 2% ENB | 38.5 | gas phase granular EPDM rubber | Union Carbide UNIPOL™ |
| N-650 CARBON BLACK | 31.0 | filler | Columbian |
| SUNPAR-2280 | 27.5 | processing oil | R.E. Carroll |
| KADOX-902 ZINC OXIDE | 1.4 | activator | R.E. Carroll |
| STEARIC ACID | 0.3 | activator | Harwick |
| TBBS | 0.7 | accelerator | Monsanto |
| TMTD | 0.3 | accelerator | Vanderbilt |
| Sulfur | 0.3 | vulcanizing agent | |
| TOTAL: | 100.0 | | |

## TABLE 2

| Equipment | Single Screw[1] | Twin Screw Corotating[2] ZSK-53 | Twin Screw[3] Counterrotating LCM-50 |
|---|---|---|---|
| Feed Rate | 245 lb/hr | 50 lb/hr | 40 lb/hr |
| Rotor Speed | 10 rpm | 40 rpm | 54 rpm |
| Barrel Temp. | ------- | 80°C | 118°C |
| Extruder Load | 77 amps | ------- | -------- |
| Compound Temp. | 88°C | 111°C | 115°C |

[1] Single Screw Extruder:

    Feed section: 7.94 " OD, 8" pitch, 3.375 L/D, decreasing root diameter from 7 "

    down to 3.5 " through end of compression zone.

    Compression section: 1 L/D

    Metering section: 4.49 " OD, 4.5 " pitch, 4.5 l/d, 0.493 " channel depth.

[2] Twin Screw Co-rotating ZSK-53 3-LOBE Extruder:
Nominal screw diameter: 53 mm

Screw element description:

| # OF | PITCH) (mm) | LENGTH (mm) | ELEMENT TYPE |
|---|---|---|---|
| 1 | 45 | 45 | SPACER |
| 1 | 90SK | 45 | CONVEYING UNDERCUT FLIGHT |
| 2 | 60 | 180 | CONVEYING |
| 2 | 45 | 30 | CONVEYING |
| 1 | 5X11 RHKB | 60 | KNEADING BLOCK, RIGHT HAND |
| 2 | 5X5 RHKB | 30 | KNEADING BLOCK, RIGHT HAND |
| 1 | 5X5 LHKB | 30 | KNEADING BLOCK, LEFT HAND |
| 1 | 90 | 30 | CONVEYING |
| 1 | 3/1 | 30 | TRANSITION |
| 2 | 60 SF | 6 | SINGLE FLIGHT CONVEYING |

[3] Twin Screw Counter-rotating LCM-50:
Nominal screw diameter: 50 mm

## Example 2

Elastomers are often compounded into rigid thermoplastics in order to make them more durable. These blends are typically rich in thermoplastic, having the elastomer as a discrete dispersed phase. The compositions provided in Table 2 represent formulations typical of a class of materials denoted as thermoplastic olefins or TPO. This class of materials commonly employ polypropylene as the rigid thermoplastic and ethylene-propylene rubber as the elastomer. Compounding is performed in a continuous mode of operation, preferrably a twin screw extruder or equivalent. Note that because of the continuous nature of the equipment, the commercial elastomers used to produce TPO are either in a pelleted form or masterbatched with polypropylene. In this example, we chose DFDB-1085 in pellet form as the control. This very low density ethylene-butene copolymer is a thermoplastic resin having characteristics similar to elastomers. This product is available from Union Carbide.

Five granular elastomers, labeled product A-D & I, are compared to a commercial impact modifier, DFDB-1085, in a typical TPO recipe. The composition of the granular elastomers are shown in Table 3. Each elastomer was compounded into a 12 MFR polypropylene homopolymer on a Berstorff® 25mm twin screw extruder. The processing conditions are found in Table 4. As shown in Table 4, the granular elastomers show equivalent performance compared to the commercial impact modifier control.

Table 3-

| Composition of Granular Elastomers | | | | | |
|---|---|---|---|---|---|
| | **Product A** | **Product B** | **Product C** | **Product D** | **Product I** |
| C2=, wt% | 78 | 66 | 74 | 67 | 70 |
| C3=, wt% | 22 | 32 | 22 | 20 | 24 |
| ENB, wt% | 0 | 2 | 4 | 4 | 6 |
| CB, wt% | 3 | 26 | 11 | 22 | 18 |
| ML (1+4) 100°C | | 55 | 55 | 55 | 40 |
| Screw configuration is as follows*:<br>    9 x C/3 x KB/B/5 x P/LGM/4 x P/2 x SGM/C/2 x S/C<br>*Screw Design Code:<br>C=conveying section, KB=kneading block, B=blister ring, P=compression, LGM=large gear mixer, SGM=small gear mixer, S=spacer | | | | | |

Table 4 -

| Experiment Design and Results | | | | | | | | |
|---|---|---|---|---|---|---|---|---|
| **Formulation** | **Units** | **1** | **2** | **3** | **4** | **5** | **6** | **7** |
| PP Homopolymer | wt% | 100 | 85.7 | 81 | 84.3 | 82 | 83 | 86 |
| Product A | wt% | | 14.3 | | | | | |
| Product B | wt% | | | 19 | | | | |
| Product C | wt% | | | | 15.7 | | | |
| Product D | wt% | | | | | 18 | | |
| Product I | wt% | | | | | | 17 | |
| VLDPE (DFDB-1085) | wt% | | | | | | | 14 |
| **Process Conditions** | | | | | | | | |
| Temp. Zone 1 | °F | 360 | 360 | 360 | 360 | 360 | 360 | 360 |
| Temp. Zone 2 | °F | 350 | 350 | 350 | 350 | 350 | 350 | 350 |
| Temp. Zone 3 | °F | 380 | 365 | 365 | 365 | 365 | 365 | 370 |
| Temp. Zone 4 | °F | 370 | 370 | 370 | 370 | 370 | 370 | 370 |
| Temp. Die | °F | 360 | 370 | 370 | 370 | 370 | 370 | 370 |
| Temp. Melt | °F | 405 | 404 | 409 | 410 | 409 | 408 | 405 |
| Pressure | psi | 200 | 300 | 620 | 570 | 510 | 530 | 210 |
| RPM | | 100 | 100 | 100 | 100 | 100 | 100 | 100 |

Table 4 -   (continued)

| Experiment Design and Results | | | | | | | | |
|---|---|---|---|---|---|---|---|---|
| **Product Performance** | | | | | | | | |
| MFR 230°C, 44psi | g/dmin | | 8.6 | 10.9 | 9.1 | 10.4 | 10.4 | 10.4 |
| Flexural Modulus | kpsi | | 171 | 161 | 162 | 159 | 161 | 164 |
| N. Izod 23°C | ftlb/in | | .8 | .9 | .8 | 1 | 1 | .9 |
| N. Izod 0°C | ftlb/in | | .4 | .6 | .5 | .6 | .7 | .4 |
| N. Izod -20°C | ftlb/in | | .4 | .4 | .4 | .3 | .4 | .4 |

## Example 3

Blends of elastomer and thermoplastics which are a rich in elastomer are often referred to as thermoplastic elastomers (TPE). A subset of the TPE family is a composition where the elastomer is crosslinked in-situ. These polymer blends are referred to as dynamic vulcanizates. They offer properties which are very similar to those of traditional crosslinked elastomers, but having the advantage of being reprocessible. Current manufacturing practice employs a masterbatch approach at delivering the elastomer in a continuous basis. In this example, we compare the use of granular and masterbatched elastomers in the manufacture of a typical thermoplastic dynamic vulcanizate.

Three granular elastomers, labeled product A-C in Table 5, are compared to a polypropylene/ethylene-propylene rubber masterbatch (33:67). The composition of each formulation is shown in Table 6. All compound ingredients except cure activator are fed into the entry port of the extruder. Cure activator is added through a second entry port one third the length of the barrel, downstream of the initial entry port. A vent is located near the outlet to remove volatiles. The blends are compounded in a Berstorff® 25mm twin screw extruder. Though less labor and energy intensive in preparation, the compound product properties with granular elastomers show equivalent performance compared to the commercially available elastomers.

Table 5 -

| Composition of Granular Elastomers | | | |
|---|---|---|---|
| | **Product A** | **Product B** | **Product C** |
| C2=, wt% | 70 | 65 | 65 |
| C3=, wt% | 26 | 31 | 33 |
| ENB, wt% | 4.5 | 4.5 | 2 |
| CB, wt% | 20 | 22 | 25 |
| Gum ML (1+4) 125°C | 65 | 70 | 65 |

Table 6 -

| Experiment Design | | | | | |
|---|---|---|---|---|---|
| **Formulation** | **Units** | **1** | **2** | **3** | **4** |
| PP Homopolymer | phr | 77 | 77 | 77 | 77 |
| Product A | phr | | 120 | | |
| Product B | phr | | | 122 | |
| Product C | phr | | | | 125 |
| EPR Masterbatch | phr | 100 | | | |
| Kaolin clay | phr | 37 | 37 | 37 | 37 |
| Oil | phr | 130 | 130 | 130 | 130 |
| ZnO | phr | 2 | 2 | 2 | 2 |
| TiO2 | phr | 5 | 5 | 5 | 5 |
| Wax | phr | 5 | 5 | 5 | 5 |
| Phenolic curing resin | phr | 10 | 10 | 10 | 10 |
| Stannous chloride | phr | 1.7 | 1.7 | 1.7 | 1.7 |

**Claims**

1. A continuous process for compounding one or more polymers comprising: (i) feeding at least one granular elastomer optionally with one or more thermoplastic polymers and optionally one or more additives to a continuous mixer; (ii) masticating the granular elastomer with the optional thermoplastic polymers and the additives when present in the continuous mixer to form a compound; and (iii) pumping the compound through a die downstream of the continuous mixer.

2. A process as claimed in Claim 1 wherein the granular elastomer is selected from the group consisting of:

   ethylene-propylene copolymer;
   ethylene-propylene diene termonomer;
   copolymer of ethylene and an alpha olefin having 3 to 12 carbon atoms;
   terpolymer of ethylene, an alpha olefin having 3 to 12 carbon atoms, and a diene;
   polyisoprene;
   polybutadiene;
   a polymer of butadiene copolymerized with styrene; a polymer of acrylonitrile,
   butadiene and styrene;
   a polymer of butadiene copolymerized with acrylonitrile; a polymer of isobutylene copolymerized with isoprene;
   polychloroprene;
   a polydimethyl siloxane;
   copolymers of ethylene and vinyltrimethoxy silane;
   copolymers of ethylene and one or more of acrylonitrile, maleic acid esters, vinyl acetate, acrylic and methacrylic acid esters;
   copolymers of butadiene and isoprene;
   terpolymers of styrene, butadiene, and isoprene; chlorobutyl (chlorinated copolymer of isobutylene and isoprene);
   bromobutyl (brominated copolymer of isobutylene and isoprene); and
   brominated copolymer of isobutylene and paramethylstyrene; and

   wherein the thermoplastic polymers are selected from polyethylenes and their related copolymers such as butene, propylene, hexene, octene, 4-methyl-1-pentene copolymers; functional grades of polyethylenes such as maleic acid esters, acrylic and methacrylic acid esters, acrylonitrile, vinyl acetate, and derivatives such as chlorinated and sulfonated polyethylenes and copolymers; polypropylenes and their related copolymers; functional grades of polypropylenes such as maleic acid esters, acrylic and methacrylic acid esters; modified grades of polypropylene and copolymers; ionomers; polyvinyl chlorides and their related copolymers, functional and modified grades; polymers of acetal and their related copolymers and modified grades; fluorinated olefin polymers; polyvinylidene fluoride; polyvinyl fluoride; polyamides and their modified grades; polyimides; polyarylates; polycarbonates and their related copolymers and modified grades; polyethers; polyethersulfones; polyarylsulphones; polyketones; polyetherimides; poly(4-methyl-1-pentene); polyphenylenes and modified grades; polysulphones; polyurethanes and their related modified grades; polyesters and their related modified grades; polystyrene and their related copolymers and modified grades; polybutylene; polymers of acrylonitrile, polyacrylates, and mixtures thereof.

3. A process as claimed in claim 1 or claim 2 wherein the granular elastomer is polymerized in the gas phase optionally in the presence of an inert particulate material which is carbon black, silica, clay, talc, or a mixture thereof; wherein the continuous mixer has one or more rotors enclosed in a barrel, the barrel having one or more feed ports and optionally one or more vent ports located along its length, and at least one capillary die or profile die connected to the barrel; and the continuous mixer is optionally coupled to a melt pump or a single screw extruder.

4. A process as claimed in any one of the preceding claims wherein dynamic vulcanization of the elastomeric phase is effected in the continuous mixer.

5. A continuous process for the compounding one or more polymers comprising: (i) blending at least one granular elastomer optionally with one or more thermoplastic polymers and optionally with one or more additives in a blending vessel to form a mixture; (ii) continuously feeding the mixture with the optional thermoplastic polymers and additives when present to a continuous mixer; (iii) masticating the mixture to form a compound; and (iv) pumping the compound through a die downstream to the end of the continuous mixer.

**6.** A process as claimed in Claim 5 wherein the granular elastomer is selected from the group consisting of

ethylene-propylene copolymer;
ethylene-propylene diene termonomer;
copolymer of ethylene and an alpha olefin having 3 to 12 carbon atoms;
terpolymer of ethylene, an alpha olefin having 3 to 12 carbon atoms, and a diene;
polyisoprene;
polybutadiene;
a polymer of butadiene copolymerized with styrene;
a polymer of acrylonitrile, butadiene and styrene; a polymer of butadiene copolymerized with acrylonitrile;
a polymer of isobutylene copolymerized with isoprene; polychloroprene;
a polydimethyl siloxane;
copolymers of ethylene and vinyltrimethoxy silane;
copolymers of ethylene and one or more of acryonitrile, maleic acid esters, vinyl acetate, acrylic and methacrylic acid esters;
copolymers of butadiene and isoprene;
terpolymers of styrene, butadiene, and isoprene; chlorobutyl (chlorinated copolymer of isobutylene and isoprene);
bromobutyl (brominated copolymer of isobutylene and isoprene);
brominated copolymer of isobutylene; and paramethylstyrene; and

wherein the thermoplastic polymer is selected from polyethylenes and their related copolymers such as butene, propylene, hexene, octene, 4-methyl-1-pentene copolymers; functional grades of polyethylenes such as maleic acid esters, acrylic and methacrylic acid esters, acrylonitrile, vinyl acetate, and derivatives such as chlorinated and sulfonated polyethylenes and copolymers; polypropylenes and their related copolymers; functional grades of polypropylenes such as maleic acid esters, acrylic and methacrylic acid esters; modified grades of polypropylene and copolymers; ionomers; polyvinyl chlorides and their related copolymers, functional and modified grades; polymers of acetal and their related copolymers and modified grades; fluorinated olefin polymers; polyvinylidene fluoride; polyvinyl fluoride; polyamides and their modified grades; polyimides; polyarylates; polycarbonates and their related copolymers and modified grades; polyethers; polyethersulfones; polyarylsulphones; polyketones; polyetherimides; poly-(4-methyl-1-pentene); polyphenylenes and modified grades; polysulphones; polyurethanes and their related modified grades; polyesters and their related modified grades; polystyrene and their related copolymers and modified grades; polybutylene; polymers of acryloni-trile, polyacrylates, and mixtures thereof.

**7.** A process as claimed in Claim 6 wherein the granular elastomer is polymerized in the gas phase optionally in the presence of an inert particulate material which is carbon black, silica, clay, talc, or a mixture thereof; and wherein the continuous mixer has one or more rotors enclosed in a barrel, the barrel having one or more feed ports and optionally one or more vent ports located along its length, and at least one capillary die or at least one profile die connected to the barrel; and the continuous mixer is optionally coupled to a melt pump or a single screw extruder.

**8.** A process as claimed in any one of claims 5 to 7 wherein dynamic vulcanization of the elastomeric phase is effected in the continuous mixer.

**9.** An article whenever prepared by the process of any one of the preceding claims.

FIGURE 1.  CONTINUOUS RUBBER COMPOUNDING